# EUROPÄISCHE PATENTANMELDUNG

(11) **EP 2 230 669 A1**
(43) Veröffentlichungstag der Anmeldung: **22.09.2010**
(21) Anmeldenummer: 10002731.7
(22) Anmeldetag: 16.03.2010
(51) Int. Cl.: H01B 1/02, B32B 15/01, B32B 15/02, C22C 21/00, C22C 21/06

(54) **Bauelement einer elektrischen Schaltung und Herstellungsverfahren für ein derartiges Bauelement**

(30) Priorität: 17.03.2009 DE 102009013198; 26.06.2009 DE 102009030864
(71) Anmelder: Hydro Aluminium Deutschland GmbH, 53117 Bonn (DE)
(72) Erfinder: Höfler, Joachim, 52159 Roetgen (DE); Engler, Olaf, 53229 Bonn (DE); Finkelnburg, Wolf-Dieter, 53117 Bonn (DE); Pritzlaff, Reinhard, 50181 Bedburg (DE)
(74) Vertreter: Tilmann, Max Wilhelm

(57) **Zusammenfassung**

Die Erfindung betrifft ein Bauelement einer elektrischen Schaltung, insbesondere Kabel oder Kontaktteil, das aus einem Verbundwerkstoff hergestellt ist, der zumindest aus einem ersten Werkstoff und einem zweiten Werkstoff hergestellt ist, wobei zumindest der erste oder der zweite Werkstoff Aluminium oder eine Aluminiumlegierung ist und zumindest der erste oder der zweite Werkstoff elektrisch leitend ist.

## Beschreibung

Die Erfindung betrifft ein Bauelement einer elektrischen Schaltung, insbesondere ein Kabel oder ein Kontaktteil, sowie ein Herstellungsverfahren für ein derartiges Bauelement. Ferner betrifft die Erfindung Verwendungen für derartige Bauelemente.

Aus dem Kraftfahrzeugbau ist es aus der Praxis bekannt, Bauelemente der in dem Kraftfahrzeug vorgesehenen elektrischen Schaltungen aus Kupfer oder Kupferlegierungen herzustellen. In der Vergangenheit hat sich gezeigt, dass Kupfer einen hohen Materialpreis aufweist, sodass die Herstellungskosten für derartige Bauelemente hoch sind.

Vor diesem Hintergrund liegt der Erfindung die Aufgabe zugrunde, ein Bauelement einer elektrischen Schaltung vorzuschlagen, das zumindest einen der Nachteile der aus dem Stand der Technik bekannten Bauelemente nicht aufweist, sowie ein Herstellungsverfahren für ein derartiges Bauelement und eine Verwendung für ein derartiges Bauelement vorzuschlagen.

Diese Aufgabe wird durch die Gegenstände der nebengeordneten Ansprüche gelöst. Vorteilhafte Ausführungsformen sind in den Unteransprüchen und der hiernach folgenden Beschreibung der Erfindung wiedergegeben.

Die Erfindung geht von dem Grundgedanken aus, das Bauelement zumindest teilweise aus einem Verbundwerkstoff herzustellen, der zumindest aus einem ersten Werkstoff und einem zweiten Werkstoff hergestellt ist, wobei zumindest der erste oder der zweite Werkstoff Aluminium oder eine Aluminiumlegierung ist und zumindest der erste oder der zweite Werkstoff elektrisch leitend ist.

Der Einsatz eines Verbundwerkstoffs, bei dem zumindest einer der für den Verbundwerkstoff eingesetzten Werkstoffe Aluminium oder eine Aluminiumlegierung ist, bietet den Vorteil, dass ein derartiges Bauteil leichter ist, als ein vergleichbares Bauteil, bei dem anstelle des Aluminiumwerkstoffs Kupfer eingesetzt würde. Bei der bevorzugten Verwendung des erfindungsgemäßen Bauelements für eine elektrische Schaltung eines Land- oder Wasserfahrzeugs oder eines Flugzeugs bietet dies den Vorteil, dass das Gesamtgewicht des Land- oder Wasserfahrzeugs oder des Flugzeugs reduziert werden kann. Dies ist umso mehr vorteilhaft, als dass in der Vergangenheit der Trend festzustellen war, Land- oder Wasserfahrzeuge oder Flugzeuge mehr und mehr mit elektrischen Schaltungen, insbesondere elektrisch gesteuerten Komponenten auszurüsten, wodurch wiederum ein erhöhter Bedarf an Signal- oder Stromleitern, insbesondere Kaben, entstanden ist. Der Einsatz eines Verbundwerkstoffs, der zumindest als einen Werkstoff Aluminium oder eine Aluminiumlegierung aufweist, ermöglicht es, diesen Trend fortzusetzen, zugleich jedoch die damit verbundene Steigerung des Gesamtgewichts kleiner zu halten, als bei vergleichbaren Bauelementen mit Kupfer.

Der Einsatz des Verbundwerkstoffs ermöglicht es, ein Bauelement herzustellen, das eine gute elektrische Leitfähigkeit mit hoher Festigkeit, beispielsweise einer Kriechbeständigkeit bis ca. 150°C, möglich macht. Ebenso kann mit dem Verbundwerkstoff ein Bauelement hergestellt werden, das eine hohe Dauerfestigkeit und/oder Klemmfestigkeit aufweist.

Das erfindungsgemäße Bauelement einer elektrischen Schaltung ist elektrisch leitend. Hierfür ist zumindest der erste oder der zweite Werkstoff elektrisch leitend. Insbesondere bevorzugt sind sowohl der erste als auch der zweite Werkstoff elektrisch leitend.

Das Bauelement ist insbesondere bevorzugt ein Kabel oder ein Kontaktteil, beispielsweise ein Stecker, eine Buchse, ein Kabelschuh oder eine Kabelklemme, oder beispielsweise ein Element einer elektrisch leitenden Klemmverbindung oder einer elektrisch leitenden Schraubverbindung. Die elektrische Schaltung ist insbesondere bevorzugt keine auf einer Siliziumplatine realisierte Schaltung. Insbesondere bevorzugt ist die elektrische Schaltung das Bordnetz oder ein Teil des Bordnetzes eines Land- oder Wasserfahrzeugs oder eines Flugzeugs. Beispielsweise ist die elektrische Schaltung die Verbindung einer Batterie mit Stromabnehmern. Ebenso kann die elektrische Schaltung die Verbindung eines Sensors oder eines Aktors mit einer Auswerteeinheit sein.

Der Verbundwerkstoff kann allein unter Einsatz eines ersten Werkstoffs und eines zweiten Werkstoffs hergestellt sein. In einer bevorzugten Ausführungsform ist der Verbundwerkstoff jedoch aus einem ersten Werkstoff und einem zweiten Werkstoff sowie aus weiteren Werkstoffen hergestellt.

In einer bevorzugten Ausführungsform ist der Verbundwerkstoff zumindest aus einem ersten Werkstoff und einem zweiten Werkstoff hergestellt, wobei der erste Werkstoff Aluminium oder eine Aluminiumlegierung ist und wobei der zweite Werkstoff Aluminium oder eine Aluminiumlegierung ist. In einer ersten besonders bevorzugten Alternative, ist der erste Werkstoff Aluminium und der zweite Werkstoff eine Aluminiumlegierung. In einer zweiten bevorzugten Alternative ist der erste Werkstoff Aluminium und der zweite Werkstoff Aluminium. In einer dritten bevorzugten Alternative ist der erste Werkstoff eine Aluminiumlegierung und der zweite Werkstoff Aluminium. In einer vierten bevorzugten Ausführungsform ist der erste Werkstoff eine Aluminiumlegierung und der zweite Werkstoff eine Aluminiumlegierung, wobei in einer insbesondere bevorzugten Ausführungsform die Aluminiumlegierung des zweiten Werkstoffs eine andere Aluminiumlegierung ist, als die Aluminiumlegierung des ersten Werkstoffs.

Ein Verbundwerkstoff aus Aluminium oder Aluminiumlegierungen erlaubt es, einen Werkstoff herzustellen, der zum Einen eine gute Leitfähigkeit aufweist und zum Anderen andere Anforderungen, wie beispielsweise Festigkeitsanforderungen, insbesondere Dauer- und/oder Klemmfestigkeitsanforderungen oder Anforderungen an die Korrosionsfestigkeit erfüllt. So kann beispielsweise als erster Werkstoff eine besonders gut leitende Aluminiumlegierung verwendet werden, während als zweiter Werkstoff Rein- oder Reinstaluminium verwendet wird, das eine besonders gute Korrosionsbeständigkeit aufweist.

Die Erfindung erlaubt es, als ersten Werkstoff einen Aluminiumwerkstoff mit hoher Festigkeit zu verwenden und als zweiten Werkstoff einen Aluminiumwerkstoff mit hoher Leitfähigkeit, die zu einem Verbundwerkstoff verbunden werden. Insbesondere bevorzugt wird als erster Werkstoff, der besonders bevorzugt als Kernwerkstoff verwendet wird, ein fester oder hochfester Kernwerkstoff verwendet. Dadurch kann eine hohe Dauer- und Klemmfestigkeit erreicht werden. Ergänzend oder alternativ ist der erste Werkstoff, der vorzugsweise den Kernwerkstoff bildet, als gut umformbarer Kernwerkstoff, insbesondere aus einer Aluminium-Magnesium, Alumnium-Scandium-Legierung, Aluminium-Chrom-Legierung oder Aluminium-Mangan-Legierung ausgebildet.

Im Rahmen dieser Beschreibung der Erfindung wird der Verbundwerkstoff teilweise derart beschrieben, dass der erste Werkstoff den Kernwerkstoff bildet, während der zweite Werkstoff als der Werkstoff beschrieben wird, der im Rahmen der möglichen Herstellungsverfahren auf den Kernwerkstoff aufgebracht wird. Der Erfindungsgedanke ist jedoch nicht darauf beschränkt, dass der erste Werkstoff den Kernwerkstoff bildet. Soweit in dieser Beschreibung Ausführungsbeispiele beschrieben werden, die auf den ersten Werkstoff Bezug nehmen und die nicht zu gleich die Funktion des ersten Werkstoffs als Kernwerkstoff bezeichnen, so sind diese Ausführungsbeispiele stets auch so zu verstehen, dass der erste Werkstoff nicht als Kernwerkstoff verwendet wird, sondern beispielsweise selbst auf einen dritten Werkstoff oder beispielsweise den zweiten Werkstoff im Rahmen der möglichen Herstellungsverfahren aufgebracht wird.

In einer bevorzugten Ausführungsform sind sowohl der erste als auch der zweite Werkstoff elektrisch leitend. Dadurch kann die gesamte Leitfähigkeit des Bauelements erhöht werden. In einer besonders bevorzugten Ausführungsform weist der erste Werkstoff eine größere elektrische Leitfähigkeit auf, als der zweite Werkstoff. Alternativ ist es möglich, dass der erste Werkstoff die gleiche elektrische Leitfähigkeit aufweist, wie der zweite Werkstoff.

In einer bevorzugten Ausführungsform ist der erste Werkstoff und/oder der zweite Werkstoff Reinaluminium, Reinstaluminium, eine Aluminium-Magnesium, eine Aluminium-Scandium-Legierung, eine Aluminium-Chrom-Legierung, eine Aluminium-Mangan-Legierung, eine Aluminium-Knetlegierung, insbesondere bevorzugt aus dem Bereich 1XXX, 3XXX, 5XXX, 6XXX oder 8XXX der Norm CEN EN 573-3 oder eine Aluminium-Gusslegierung. Insbesondere bevorzugt ist der erste Werkstoff und/oder der zweite Werkstoff eine der folgenden Legierungen: AlMn1: AlMn1Cu; AlMn1Mg1Cu; AlMn0,5Mg0,5; AlMg3,5Cr; AlMgSi; AlSi1MgMn; AlFe1Mn0,8.

In einer besonders bevorzugten Ausführungsform ist der zweite Werkstoff Reinaluminium oder Reinstaluminium und der erste Werkstoff eine Aluminium-Knetlegierung.

Unter Reinaluminium wird nicht legiertes Aluminium mit einem Reinheitsgrad von 98 - 99,9 Gew% verstanden. Als Reinstaluminium wird Aluminium mit einem Reinheitsgrad von mehr als 99,9 Gew% verstanden.

In einer besonders bevorzugten Ausführungsform ist der Verbundwerkstoff zumindest über einen Abschnitt des Bauelements ein Schichtverbundwerkstoff, wobei eine erste Schicht durch den ersten Werkstoff und eine zweite Schicht durch den zweiten Werkstoff gebildet wird. Insbesondere bevorzugt weist bei einem derartigen Schichtverbundwerkstoff ein senkrecht zur Erstreckung der Schichten des Schichtverbundwerkstoffs vorgenommener Querschnitt die Form eines Parallelogramms, insbesondere eines Rechtecks auf. Ebenso bevorzugt kann ein senkrecht zu der Erstreckung der Schichten des Schichtverbundwerkstoffs vorgenommener Querschnitt die Form eines Kreises oder einer Ellipse aufweisen, wobei der zweite Werkstoff in Radialrichtung gesehen an der Außenoberfläche des ersten Werkstoffs angeordnet ist und den ersten Werkstoff zumindest über einen Abschnitt der Außenoberfläche des ersten Werkstoffs bedeckt. Bei der bevorzugten Ausführungsform eines im Querschnitt kreisförmig oder ellipsenförmigen Schichtverbundwerkstoffs kann der an der Außenoberfläche des ersten Werkstoffs angeordnete zweite Werkstoff die Außenoberfläche des ersten Werkstoffs vollständig bedecken. In einer ebenso bevorzugten, alternativen Bauform bedeckt der zweite Werkstoff nur einen Teil der Außenoberfläche des ersten Werkstoffs. Der verbleibende Teil der Außenoberfläche des ersten Werkstoffs kann entweder freibleibend ausgestaltet sein oder kann beispielsweise durch einen oder weitere Werkstoffe bedeckt sein.

Gemäß einer bevorzugten Ausführungsform eines Schichtverbundwerkstoffs weist der Schichtverbundwerkstoff eine obere Schicht aus dem zweiten Werkstoff, eine mittlere Schicht aus dem ersten Werkstoff und eine untere Schicht aus einem dritten Werkstoff auf. Der dritte Werkstoff kann mit dem zweiten Werkstoff identisch sein oder von dem zweiten Werkstoff unterschiedlich sein. Ferner können oberhalb der oberen Schicht und unterhalb der unteren Schicht weitere Werkstoffschichten, auch mehrere Schichten übereinander vorgesehen sein. In einer bevorzugten Ausführungsform weist der Verbundwerkstoff einen Kernbarren oder eine Kernplatte auf, der/die beispielsweise durch den ersten Werkstoff gebildet werden können und der/die beidseitig mit einem hochleitfähigen Werkstoff plattiert sind. Dabei kann die Dimensionierung des Kernbarrens und/oder der Plattierschicht bevorzugt an die Stromstärke angepasst werden. Auf diese Weise kann die Stromleitung in genügendem Maße gesichert werden. In einer insbesondere bevorzugten Ausführungsform weisen die äußere Schicht, bzw. die äußeren Schichten, insbesondere die aufplattierten Schichten eine gute Korrosionseigenschaft auf. Bevorzugt wird für die äußere Schicht, bzw. die äußeren Schichten Reinaluminium verwendet.

In einer besonders bevorzugten Ausführungsform weist das Bauelement eine größere Längserstreckung auf, als seine Breitenerstreckung und seine Höhenerstreckung. Insbesondere bevorzugt ist die Höhenerstreckung des erfindungsgemäßen Bauteils geringer als 10 mm, insbesondere bevorzugt geringer als 6 mm, insbesondere bevorzugt geringer als 3 mm. In einer bevorzugten Ausführungsform ist der Verbundwerkstoff zumindest über einen Abschnitt des Bauelements ein Schichtverbundwerkstoff, wobei eine erste Schicht durch den ersten Werkstoff und eine zweite Schicht durch den zweiten Werkstoff gebildet wird, wobei die zweite Schicht in einem senkrecht zu der Erstreckung der Schichten des Schichtverbundwerkstoffs vorgenommenen Querschnitt weniger als 25 % des Gesamtquerschnitts einnimmt und insbesondere bevorzugt weniger als 15 %. Ergänzend oder alternativ wird bevorzugt, dass die von dem zweiten Werkstoff in dem Querschnitt eingenommene Fläche mehr als 3 % beträgt, insbesondere bevorzugt von mehr als 5%.

In einer besonders bevorzugten Ausführungsform ist der erste Werkstoff des Verbundwerkstoffs mit dem zweiten Werkstoff des Verbundwerkstoffs dadurch verbunden, dass das oberflächennahe Gefüge des ersten Werkstoffs und das oberflächennahe Gefüge des zweiten Werkstoffs eine innige metallische Verbindung eingehen. Eine derartige Verbindung zwischen den Werkstoffen wird beispielsweise dadurch erreicht, dass der Verbundwerkstoff durch Plattieren des zweiten Werkstoffs auf den ersten Werkstoff oder durch ein Mehrschicht-Gießverfahren oder durch Ko-extrusion hergestellt wird. Als Plattieren wird insbesondere das Aufwalzen des zweiten Werkstoffs auf den ersten Werkstoff, das Aufschweißen, Aufkleben oder Auflöten des zweiten Werkstoffs auf den ersten Werkstoff, ein Angießen des ersten Werkstoffs an den zweiten Werkstoff, ein Tauchen des ersten Werkstoffs in den zweiten Werkstoff oder ein Sprengplattieren oder Kombinationen dieser Herstellungsverfahren. Alternativ sind Verfahren der Ko-Extrusion, beispielsweise des direkten oder indirekten Strangpressens, des hydrostatischen Strangpressens oder des Verbundstrangpressens möglich.

Das erfindungsgemäße Herstellungsverfahren für das erfindungsgemäße Bauelement sieht vor, dass der Verbundwerkstoff durch Plattieren, ein Mehrschicht-Gießverfahren oder Ko-Extrusion aus zumindest dem ersten Werkstoff und dem zweiten Werkstoff hergestellt wird. In einer bevorzugten Ausführungsform wird der Verbundwerkstoff zur Herstellung eines Halbzeugs in eine Bandform gebracht, beispielsweise auf eine Bandform zugeschnitten, oder in Form eines Drahts hergestellt. Insbesondere bevorzugt wird das band- oder drahtförmige Halbzeug zur Bildung einer Bandrolle oder einer Drahtrolle aufgewickelt, insbesondere bevorzugt in einem Haspler.

Das erfindungsgemäße Bauelement wird besonders bevorzugt für eine elektrische Schaltung eines Land- oder Wasserfahrzeugs oder eines Flugzeugs, insbesondere bevorzugt für eine elektrische Schaltung eines Kraftfahrzeugs, beispielsweise eines Automobils oder Motorrads eingesetzt. Insbesondere bevorzugt weist eine derartige elektrische Schaltung Kabel und/oder Kontaktteile auf, insbesondere bevorzugt Kabel und/oder Kontaktteile, die nach der Art des erfindungsgemäßen Bauelements ausgebildet sind.

Die Erfindung wird ferner durch einen Aluminiumwerkstoff realisiert, der als Verbundwerkstoff ausgebildet ist und mit funktionaler Plattierung, Mehrschicht-Gießverfahren oder Ko-Extrusion hergestellt wurde. In einer bevorzugten Ausführungsform wird bei dem erfindungsgemäßen Aluminiumwerkstoff ein erster Aluminiumwerkstoff auf einen zweiten, anderen Aluminiumwerkstoff plattiert. Der erfindungsgemäße Aluminiumwerkstoff wird insbesondere bevorzugt für das vorstehend näher beschriebene erfindungsgemäße Bauelement verwendet.

Ebenso wird die Erfindung durch ein Halbzeug zum Herstellen des erfindungsgemäßen Bauelements realisiert, insbesondere durch einen bandförmigen oder drahtförmigen Verbundwerkstoff, der zumindest aus einem ersten Werkstoff und einem zweiten Werkstoff hergestellt ist, wobei zumindest der erste oder der zweite Werkstoff Aluminium oder eine Aluminiumlegierung ist und zumindest der erste oder der zweite Werkstoff elektrisch leitend ist.

Ein weiterer Vorteil der Verbundwerkstoffe liegt in einer signifikanten Kostenersparnis bei der Produktherstellung, und einer nennenswerten Gewichtsersparnis auf Basis einer Vielzahl an Verbindungselementen in dem besonders bevorzugten Einsatzgebiet der automobilen Bordnetze. Ferner ermöglicht es die Erfindung die Festigkeit im Vergleich zu einfachen Bauelementen aus Reinaluminium zu erhöhen, wodurch Vorteile bei elektrischen Verbindungstechnik und Verbindungssicherheit erzielt werden können. Insbesondere kann die Erfindung es auch ermöglichen, Bauelemente mit einer Kombination aus hoher Festigkeit und hoher Leitfähigkeit und guter Korrosionsbeständigkeit herzustellen.

Nachfolgend wird das erfindungsgemäße Bauelement anhand eines Ausführungsbeispiels näher erläutert. Zur Erzeugung eines erfindungsgemäßen Bauelements wurde ein Aluminium-Mehrschichtverbund erzeugt, der aus einem Kernwerkstoff EN AW-3105 nach CEN EN 573-3 als ersten Werkstoff und beidseitigen Plattierungen mit Reinaluminium bestand. Die jeweilige Plattierung (Auflage) wies im Querschnitt einen Flächenanteil von 13 % des Querschnitts auf. Dieser Aluminium-Mehrschichtverbund wurde auf eine Dicke von 2 mm gewalzt. Das so hergestellte Bauteil wies eine Festigkeit von mehr als 200 MPa und eine elektrische Leitfähigkeit von mehr als 30 m/Ω x mm² auf.

## Patentansprüche

1. Bauelement einer elektrischen Schaltung, insbesondere Kabel oder Kontaktteil, das zumindest teilweise aus einem Verbundwerkstoff hergestellt ist, der zumindest aus einem ersten Werkstoff und einem zweiten Werkstoff hergestellt ist, wobei zumindest der erste oder der zweite Werkstoff Aluminium oder eine Aluminiumlegierung ist und zumindest der erste oder der zweite Werkstoff elektrisch leitend ist.

2. Bauelement nach Anspruch 1, **dadurch gekennzeichnet, dass** der Verbundwerkstoff zumindest aus einem ersten Werkstoff und einem zweiten Werkstoff hergestellt ist, wobei der erste Werkstoff Aluminium oder eine Aluminiumlegierung ist und wobei der zweite Werkstoff Aluminium oder eine Aluminiumlegierung ist.

3. Bauelement nach Anspruch 1 oder 2, **dadurch gekennzeichnet, dass** der erste und der zweite Werkstoff elektrisch leitend sind und der erste Werkstoff eine größere elektrische Leitfähigkeit hat, als der zweite Werkstoff.

4. Bauelement nach einem der Ansprüche 1 bis 3, **dadurch gekennzeichnet, dass** der erste Werkstoff und/oder der zweite Werkstoff Reinaluminium, Reinstaluminium, eine Aluminium-Magnesium, eine Aluminium-Scandium-Legierung, eine Aluminium-Chrom-Legierung, eine Aluminium-Mangan-Legierung, eine Aluminium-Knetlegierung, insbesondere bevorzugt aus dem Bereich 1XXX, 3XXX, 5XXX, 6XXX oder 8XXX der Norm CEN EN 573-3, eine Aluminium-Gusslegierung, insbesondere eine der folgenden Legierungen: AlMn1; AlMn1Cu; AlMn1Mg1Cu; AlMn0,5Mg0,5; AlMg3,5Cr; AlMgSi: AlSi1 MgMn; AlFe1 Mn0,8 ist.

5. Bauelement nach einem der Ansprüche 1 bis 4, **dadurch gekennzeichnet, dass** der zweite Werkstoff Reinaluminium oder Reinstaluminium und der erste Werkstoff eine Aluminium-Magnesium, eine Aluminium-Scandium-Legierung, eine Aluminium-Chrom-Legierung, eine Aluminium-Mangan-Legierung, eine Aluminium-Knetlegierung, insbesondere bevorzugt aus dem Bereich 1XXX, 3XXX, 5XXX, 6XXX oder 8XXX der Norm CEN EN 573-3, eine Aluminium-Gusslegierung, insbesondere eine der folgenden Legierungen: AlMn1; AlMn1Cu; AlMn1Mg1Cu; AlMn0,5Mg0,5: AlMg3,5Cr; AlMgSi: AlSi1MgMn: AlFe1Mn0,8 ist.

6. Bauelement nach einem der Ansprüche 1 bis 5, **dadurch gekennzeichnet, dass** der Verbundwerkstoff zumindest über einen Abschnitt des Bauelements ein Schichtverbundwerkstoff ist, wobei eine erste Schicht durch den ersten Werkstoff und eine zweite Schicht durch den zweiten Werkstoff gebildet wird.

7. Bauelement nach Anspruch 6, **dadurch gekennzeichnet, dass**
- ein senkrecht zu der Erstreckung der Schichten des Schichtverbundwerkstoffs vorgenommener Querschnitt die Form eines Parallelogramms, insbesondere eines Rechtecks, aufweist
oder
- ein senkrecht zu der Erstreckung der Schichten des Schichtverbundwerkstoffs vorgenommener Querschnitt die Form eines Kreises oder einer Ellipse aufweist, wobei der zweite Werkstoff in Radialrichtung gesehen an der Außenoberfläche des ersten Werkstoffs angeordnet ist und den ersten Werkstoff zumindest über einen Abschnitt der Außenoberfläche des ersten Werkstoffs bedeckt.

8. Bauelement nach einem der Ansprüche 1 bis 7, **dadurch gekennzeichnet, dass** der erste Werkstoff mit dem zweiten Werkstoff **dadurch** verbunden ist, dass das oberflächennahe Gefüge des ersten Werkstoffs und das oberflächennahe Gefüge des zweiten Werkstoffs eine innige metallische Verbindung eingehen.

9. Bauelement nach einem der Ansprüche 1 bis 8, **dadurch gekennzeichnet, dass** der Verbundwerkstoff durch Plattieren, ein Mehrschicht-Gießverfahren oder Ko-Extrusion aus zumindest dem ersten Werkstoff und dem zweiten Werkstoff hergestellt ist.

10. Halbzeug zum Herstellen eines Bauelements nach einem der Ansprüche 1 bis 9, insbesondere bandförmiger oder drahtförmiger Verbundwerkstoff, der zumindest aus einem ersten Werkstoff und einem zweiten Werkstoff hergestellt ist, wobei zumindest der erste oder der zweite Werkstoff Aluminium oder eine Aluminiumlegierung ist und zumindest der erste oder der zweite Werkstoff elektrisch leitend ist.

11. Herstellungsverfahren für ein Bauelement nach einem der Ansprüche 1 bis 9 oder eines Halbzeugs nach Anspruch 10, **dadurch gekennzeichnet, dass** der Verbundwerkstoff durch Plattieren, ein Mehrschicht-Gießverfahren oder Ko-Extrusion aus zumindest dem ersten Werkstoff und dem zweiten Werkstoff hergestellt ist.

12. Verwendung eines Bauelements nach einem der Ansprüche 1 bis 9 für eine elektrische Schaltung eines Land- oder Wasserfahrzeugs oder eines Flugzeugs.
